# EUROPEAN PATENT APPLICATION

(11) **EP 3 404 755 A1**
(43) Date of publication of application: **21.11.2018**
(21) Application number: 17738663.8
(22) Date of filing: 13.01.2017
(51) Int. Cl.: H01M 4/66, H01M 4/131, H01M 4/36, H01M 10/052, C25D 3/38, C25D 17/02, C25D 7/06

(54) **COPPER FOIL, METHOD FOR MANUFACTURING SAME, ELECTRODE COMPRISING SAME, AND SECONDARY BATTERY COMPRISING SAME**

(30) Priority: 13.01.2016 KR 20160004290; 23.09.2016 KR 20160122345
(71) Applicant: LS Mtron Ltd., Gyeonggi-do 14119 (KR)
(72) Inventor: KIM, Seung Min, Anyang-si Gyeonggi-do 14119 (KR)
(74) Representative: Botti, Mario
(86) International application number: PCT/KR2017/000450
(87) International publication number: WO 2017/123034

(57) **Abstract**

Disclosed are a copper foil capable of securing a secondary battery with high capacity maintenance rate, a method for manufacturing the same, an electrode comprising the same, and a secondary battery comprising the same. The copper foil of the invention has a first surface and a second surface opposite thereto, and, when observing a EBSD map of the cross section thereof, each of the first and second surfaces has 1 to 8 giant protuberance(s) per 5 µm.

## Description

### [Technical Field]

The present invention relates to a copper foil, a method for manufacturing the same, an electrode comprising the same, and a secondary battery comprising the same.

### [Background Art]

A secondary battery is a kind of energy conversion device capable of storing electrical energy in chemical form and, when electricity is needed, converting it into electrical energy to generate electricity. It is also called "rechargeable battery" because they can be charged repeatedly.

The secondary battery is more economically and environmentally advantageous than a disposable primary battery. Among the secondary batteries are a lead storage battery, a nickel-cadmium secondary battery, a nickel-hydride secondary battery, a lithium secondary battery, and the like.

A lithium secondary battery can store greater energy for its size and weight, as compared to other secondary batteries. Accordingly, the lithium secondary battery is preferred in the field of information communication devices of which portability and mobility are important, and its application has been extended to the energy storage devices for hybrid cars and electric cars.

The lithium secondary battery is repeatedly used with each cycle including charge and discharge. When a certain device is operated with a completely charged lithium secondary battery, it is necessary for the lithium secondary battery to have a high charge/discharge capacity in order to increase the operation time of the device. Accordingly, there is a continuous demand for research to satisfy users' needs for higher charge/discharge capacity of lithium secondary batteries.

Even if the secondary battery has sufficiently high charge/discharge capacity at first, however, if the charge/discharge capacity of the secondary batteries is rapidly decreased as the charge/discharge cycles are repeated (that is, if its capacity maintenance rate is low or its lifespan is short), frequent change of the secondary battery would be required causing problems of inconvenience and energy waste.

### [Disclosure]

### [Technical Problem]

Therefore, the present invention is directed to a copper foil, a method for manufacturing the same, an electrode comprising the same, and a secondary battery comprising the same, which are capable of preventing these limitations and drawbacks of the related art.

An aspect of the present invention is to provide a copper foil capable of securing a secondary battery with high capacity maintenance rate.

Another aspect of the present invention is to provide a method for manufacturing a copper foil capable of securing a secondary battery with high capacity maintenance rate.

Further another aspect of the present invention is to provide an electrode capable of securing a secondary battery with high capacity maintenance rate.

Still further another aspect of the present invention is to provide a secondary battery with high capacity maintenance rate.

Additional aspects and features of the present invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims.

### [Technical Solution]

In accordance with the one aspect of the present invention, there is provided a copper foil for a secondary battery, the copper foil having a first surface and a second surface opposite thereto, the copper foil comprising: a copper film having a matte surface facing the first surface and a shiny surface facing the second surface; a first copper protuberance layer over the matte surface of the copper film; a first protective layer over the first copper protuberance layer; a second copper protuberance layer over the shiny surface of the copper film; and a second protective layer over the second copper protuberance layer, wherein, when observing a EBSD (Electron Backscattered Diffraction) map of a cross section the copper foil, each of the first and second surfaces has 1 to 8 giant protuberances per 5 µm, the giant protuberance being a protuberance protruding from a baseline by 0.7 µm or more, the baseline passing a point farthest away from the first or second surface among points on valleys and pores formed on or around the first or second surface, the baseline being parallel with the first or second surface.

In accordance with another aspect of the present invention, there is provided a method for manufacturing a copper foil for a secondary battery, the method comprising: preparing a copper film having a matte surface and a shiny surface; forming a first copper protuberance layer and a second copper protuberance layer over the matte surface and shiny surface of the copper film, respectively; and forming a first protective layer and a second protective layer over the first copper protuberance layer and the second copper protuberance layer, respectively, wherein, the forming the first and second copper protuberance layers is performed by making the copper film pass through at least two nuclei-creating plating baths and at least two nuclei-growing plating baths sequentially, and a ratio of total current applied in the nuclei-growing plating baths to total current applied in the nuclei-creating plating baths is 0.2 to 2.

In accordance with further another aspect of the present invention, there is provided an electrode comprising: a copper foil having a first surface and a second surface opposite thereto; and an active material layer disposed over at least one of the first and second surfaces of the copper foil, wherein, the copper foil comprises: a copper film having a matte surface facing the first surface and a shiny surface facing the second surface; a first copper protuberance layer over the matte surface of the copper film; a first protective layer over the first copper protuberance layer; a second copper protuberance layer over the shiny surface of the copper film; and a second protective layer over the second copper protuberance layer, and, when observing a EBSD (Electron Backscattered Diffraction) map of a cross section the copper foil, each of the first and second surfaces has 1 to 8 giant protuberance(s) per 5 µm, the giant protuberance being a protuberance protruding from a baseline by 0.7 µm or more, the baseline passing a point farthest away from the first or second surface among points on valleys and pores formed on or around the first or second surface, the baseline being parallel with the first or second surface.

In accordance with still further another aspect of the present invention, there is provided a secondary battery comprising: a cathode; an anode; an electrolyte for providing an environment enabling lithium ions to move between the cathode and the anode; and a separator for electrically insulating the cathode from the anode, wherein, the anode comprises: a copper foil having a first surface and a second surface opposite thereto; and an active material layer disposed over at least one of the first and second surfaces of the copper foil, the copper foil comprises: a copper film having a matte surface facing the first surface and a shiny surface facing the second surface; a first copper protuberance layer over the matte surface of the copper film; a first protective layer over the first copper protuberance layer; a second copper protuberance layer over the shiny surface of the copper film; and a second protective layer over the second copper protuberance layer, and, when observing a EBSD (Electron Backscattered Diffraction) map of a cross section the copper foil, each of the first and second surfaces has 1 to 8 giant protuberance(s) per 5 µm, the giant protuberance being a protuberance protruding from a baseline by 0.7 µm or more, the baseline passing a point farthest away from the first or second surface among points on valleys and pores formed on or around the first or second surface, the baseline being parallel with the first or second surface.

General description related to the present invention given above serves to illustrate or disclose the present invention and should not be construed as limiting the scope of the present invention.

### [Advantageous Effects]

According to the present invention, a secondary battery of long-lifespan, which is capable of maintaining high charge/discharge capacity for a long time in spite of the repeated charge/discharge cycles, can be produced. Accordingly, electronic product consumers' discomfort and energy waste resulting from frequent change of the secondary battery can be minimized.

### [Description of Drawings]

The accompanying drawings, which are included to provide a further understanding of the invention and are incorporated in and constitute a part of this application, illustrate embodiment(s) of the invention and together with the description serve to explain the principle of the invention. In the drawings:
FIG. 1 a cross sectional view of a copper foil for a secondary battery according to an embodiment of the present invention;
FIG. 2 is a EBSD map of a cross section of a copper foil for a secondary battery according to an embodiment of the present invention;
FIG. 3 shows an apparatus for manufacturing a copper foil for a secondary battery according to an embodiment of the present invention; and
FIG. 4 is a cross sectional view of an electrode according to an embodiment of the present invention.

### [Mode for Invention]

Hereinafter, embodiments according to the present invention will be described in detail with reference to the annexed drawings.

Those skilled in the art will appreciate that various modifications, additions and substitutions are possible, without departing from the scope and spirit of the invention as disclosed in the accompanying claims. Accordingly, the present invention includes any modifications and alterations which fall within the scope of inventions as claimed and equivalents thereto.

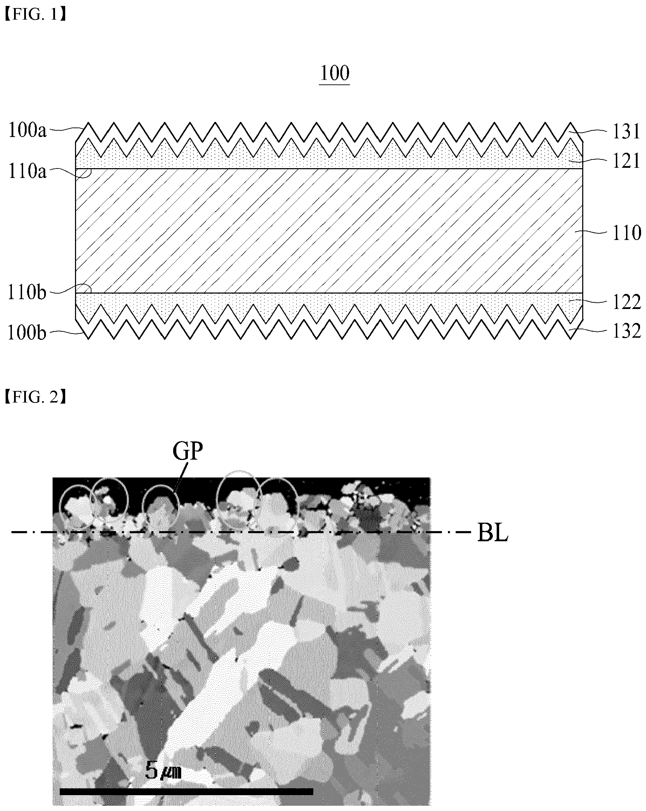

FIG. 1 a cross sectional view of a copper foil for a secondary battery according to an embodiment of the present invention.

As shown in FIG. 1, the copper foil 100 of the present invention having a first surface 100a and a second surface 100b opposite thereto comprises a copper film 110 having a matte surface 110a facing the first surface 100a and a shiny surface 110b facing the second surface 100b, a first copper protuberance layer 121 over the matte surface 110a of the copper film 110, a first protective layer 131 over the first copper protuberance layer 121, a second copper protuberance layer 122 over the shiny surface 110b of the copper film 110, and a second protective layer 132 over the second copper protuberance layer 122.

Since the copper foil 100 of the present invention has a symmetrical structure about the copper film 110, its bending in either direction can be prevented or minimized.

The copper film 110 may be formed on a rotational cathode drum through an electroplating process. The shiny surface 110b of the copper film 110 is a surface having contacted with the rotational cathode drum, and the matte surface 110a is a surface opposite thereto. The copper film 110 of the present invention may comprise 99 wt.% or more of copper.

Alternatively, the copper film 110 may be prepared through a rolling process. Just for convenience of description, one surface and the other surface the copper film 110 made through a rolling process are also called a matte surface 110a and a shiny surface, respectively.

An anode for a second battery may be produced by forming an active material layer over the copper foil 100 of the present invention.

The repeated charge/discharge of the secondary battery causes the alternate contraction and expansion of the active material layer, thereby inducing the separation of the active material layer from the copper foil 100 and deterioration of the charge/discharge efficiency of the secondary battery. Accordingly, in order to secure a secondary battery having a predetermined or higher level of capacity maintenance rate and lifespan (i.e., in order to prevent the deterioration of the charge/discharge efficiency of the secondary battery), the copper foil 100 needs to have excellent coatability with the active material so that the adhesion strength between the copper foil 100 and active material layer can be increased.

It is ideal for the stability of the secondary battery to maintain the surface area of the first and second surfaces 100a and 100b of the copper foil 100 identical to each other when they are coated with the active material. Thus, it is desirable that the first and second surfaces 100a and 100b of the copper foil 100 have identical or similar ten-point mean roughness (R_{zJIs}).

From the macroscopic point of view, the lower the ten-point mean roughness R_{zJIS} of the first and second surfaces 100a and 100b of the copper foil 100 is, the less the charge/discharge efficiency of the secondary battery comprising the copper foil 100 deteriorates.

Accordingly, each of the first and second surfaces 100a and 100b of the copper foil 100 according to an embodiment of the present invention has ten-point mean roughness R_{zJIS} of 0.2 to 0.8 µm.

If the first and second surfaces 100a and 100b of the copper foil 100 have ten-point mean roughness R_{zJIS} less than 0.2 µm, the active material would be easily separated therefrom due to the relatively small surface area of the copper foil 100, and thus, the lifespan of the secondary battery would be significantly decreased by the repetition of charge/discharge.

On the other hand, if the first and second surfaces 100a and 100b of the copper foil 100 have ten-point mean roughness R_{zJIS} more than 0.8 µm, the contact uniformity between the copper foil 100 and the active material layer would be below the desired level and there would be lots of spaces between the copper foil 100 and the active material layer (i.e., there would be some uncoated portions). Consequently, the lifespan of the secondary battery would be significantly decreased by the repetition of charge/discharge.

However, the copper foil 100 the first and second surfaces 100a and 100b of which have ten-point mean roughness R_{zJIS} of 0.2 to 0.8 µm does not always guarantee the capacity maintenance rate of the secondary battery, of 90% or higher. That is, the ten-point mean roughness R_{zJIS} of 0.2 to 0.8 µm of the first and second surfaces 100a and 100b of the copper foil 100 cannot be a sufficient condition for the capacity maintenance rate of the secondary battery of 90% or higher.

As a result of repeated research, the present applicant have found that the number of the giant protuberances GP existing on the first and second surfaces 100a and 100b of the copper foil 100 is an important factor in stably securing capacity maintenance rate of 90% or higher.

Hereinafter, referring to FIG. 2, the giant protuberances GP existing at the first and second surfaces 100a and 100b of the copper foil 100 will be described in detail.

FIG. 2 is a EBSD map of the cross section of the copper foil 100 for a secondary battery according to an embodiment of the present invention, especially showing the cross section around the first surface 100a.

According to the present invention, the first and second copper protuberance layers 121 and 122 are formed on the matte surface 110a and shiny surface 110b of the copper film 110, respectively, so that the giant protuberances GP exist at the first and second surfaces 100a and 100b of the copper foil 100. The first and second copper protuberance layers 121 and 122 may comprise 98 wt.% or more of copper.

The giant protuberance GP is defined herein as a protuberance protruding from a baseline BL by 0.7 µm or more, the baseline BL passing a point farthest away from the first or second surface 100a or 100b among points on valleys and pores formed on or around the first or second surface 100a or 100b of the copper film 110, the baseline being parallel with the first or second surface 100a or 100b.

According to the present invention, when observing a EBSD map of a cross section the copper foil 100 for a secondary battery, each of the first and second surfaces 100a and 100b of the copper foil 100 has 1 to 8 giant protuberance(s) GP per 5 µm.

If the number of the giant protuberance GP per 5 µm is 0, the adhesion strength between the copper foil 100 and the active material layer would be low due to the insufficient contact area therebetween, and thus, the lifespan of the secondary battery would be significantly decreased by the repetition of charge/discharge.

The capacity maintenance rate of the secondary battery deteriorates even when the number of the giant protuberance GP per 5 µm is 9 or more. The reason for this is believed to be that, due to too many giant protuberances GP, the active material cannot completely adhere to the first and second surfaces 100a and 100b of the copper foil 100 and void spaces occur. For this reason, as the number of charge/discharge increases, the amount of the active material separated from the copper foil 100 is getting more and the lifespan of the secondary battery is significantly decreased.

According to an embodiment of the present invention, since both the first and second surfaces 100a and 100b of the copper foil 100 are coated with the active material, the difference between the numbers of the giant protuberances GP respectively existing at the first and second surfaces 100a and 100b of the copper foil 100 is preferably 6 or less. If the difference is more than 6, the capacity maintenance rate of the secondary battery deteriorates due to the different surface shapes of the first and second surfaces 100a and 100b.

As described above, the copper foil 100 of the present invention further comprises the first and second protective layers 131 and 132 formed on the firs and second copper protuberance layers 121 and 122, respectively.

The first and second protective layers 131 and 132 may be formed by coating or electrodepositing the anticorrosion material on the first and second copper protuberance layers 121 and 1222, respectively. The anticorrosion material may include at least one of chromate, benzotriazole (BTA), and silane compound. The first and second protective layers 131 and 132 prevent the oxidation and corrosion of the copper film 110, first copper protuberance layer 121, and second copper protuberance layer 122 and improve the heat resistance thereof, so that not only the lifespan of the copper foil 100 itself but also that of the secondary battery comprising the same can be increased.

According to an embodiment of the present invention, the copper film 110 has a thickness of 2 to 34 µm and the copper foil 100 for a second battery has a thickness of 4 to 35 µm. A copper foil 100 having a thickness less than 4 µm is likely to be torn during a process for manufacturing a secondary battery, thereby reducing the work efficiency. On the other hand, if a secondary battery is manufactured with a copper foil having a thickness more than 35 µm, it is difficult to achieve high capacity due to the thick copper foil 100.

The copper foil 100 according to an embodiment of the present invention has a room temperature tensile strength of 28 to 65 kgf/mm², a high temperature tensile strength of 25 kgf/mm² or more, and an elongation of 3 to 13 %. The term "room temperature tensile strength" as used herein means a tensile strength measured at room temperature, and the term "high temperature tensile strength" means a tensile strength measured after heat treatment for 10 minutes at 135°C.

If the room temperature tensile strength of the copper foil 100 is less than 28 kgf/mm², the copper foil 100 may be wrinkled during a roll-to-roll process for manufacturing a secondary battery. On the other hand, if the room temperature tensile strength of the copper foil 100 is higher than 65 kgf/mm², the elongation of the copper foil 100 decreases and the copper foil 100 would be broken when used to make a secondary battery. The capacity maintenance rate of the secondary battery made with the wrinkled or broken copper foil 100, which is measured after 50 cycles of charge/discharge, drops below 80%.

The high temperature tensile strength of the copper foil 100 needs to be 25 kgf/mm² or more in order to avoid softening during a roll-pressing process and/or a drying process and prevent the deterioration of handlability due to the occurrence of the wrinkles.

Since the copper foil 100 of the present invention has such a high "room temperature tensile strength" and such a high "high temperature tensile strength" as well, even when the active material capable of increasing the capacity of the secondary battery (e.g., composite material of carbon active material and Si or Sn added thereto) is severely expanded when the secondary battery is charged and/or discharged, it can tolerate the thermal expansion of the active material well such that the lifespan and reliability of the secondary battery can be increased and any deterioration of work efficiency which otherwise might be caused when the copper foil 100 of the present invention is coated with the active material to produce an electrode of the secondary battery can be prevented.

The copper foil 100 according to an embodiment of the present invention has an elongation of 3 to 13 %. If the elongation is less than 3 %, there is a risk that the copper foil 100 will be broken when the active material expands or contracts. On the other hand, if the elongation is higher than 13 %, the copper foil 100 is easily stretched when used for manufacturing a secondary battery, thereby causing the deformation of the electrode. The capacity maintenance rate of the secondary battery made with the broken or deformed copper foil 100, which is measured after 50 cycles of charge/discharge, drops below 80%.

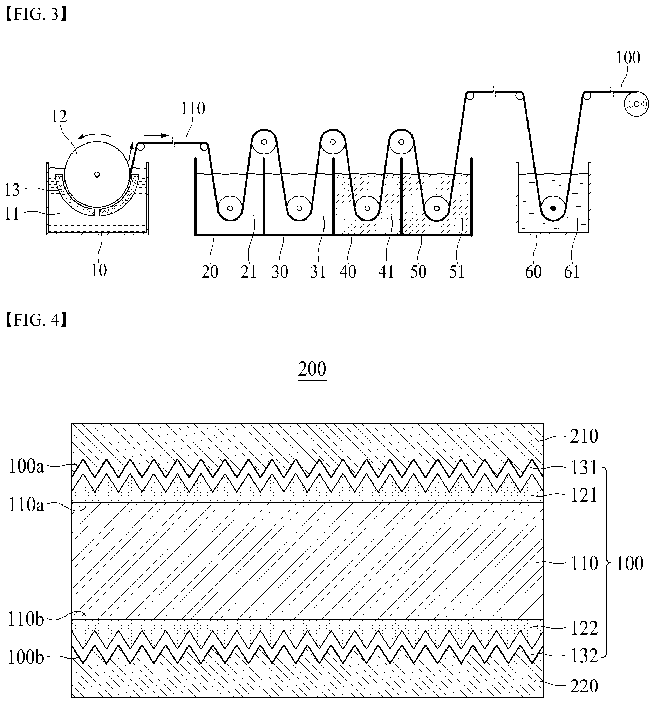

Hereinafter, referring to FIG. 3, a method for manufacturing a copper foil 100 for a secondary battery according to an embodiment of the present invention will described in detail.

The method of the present invention comprises preparing a copper film 110 having a matte surface 110a and a shiny surface 110b, forming a first copper protuberance layer 121 and a second copper protuberance layer 122 over the matte surface 110a and shiny surface 110b of the copper film 110, respectively, and forming a first protective layer 131 and a second protective layer 132 over the first copper protuberance layer 121 and second copper protuberance layer 122, respectively.

According to an embodiment of the present invention, the copper film 110 is electrodeposited on the rotational cathode drum 12 by allowing a current to flow between the anode plate 13 and rotational cathode drum 12 spaced apart from each other in the electrolytic solution 11 in the electrolytic bath 10 with a current density of 40 to 80 A/dm².

The electrolytic solution 11 comprises 50 to 100 g/L of copper ion, 50 to 150 g/L of sulfuric acid, 50 ppm or less of chlorine ion, and an organic additive. The organic additive may be hydroxyethyl cellulose (HEC), organic sulfide, organic nitride, or a mixture of two or more thereof. The electrolytic solution 11 may be maintained at 40 to 60 °C when the electroplating is performed.

As mentioned above, the roughness of the shiny surface 110b of the copper film 110 depends on the polishing level of the surface of the rotational cathode drum 12 (i.e., the surface on which the copper is deposited by the electroplating). According to an embodiment of the present invention, the surface of the rotational cathode drum may be polished with a polishing brush of #800 to #1500 grit.

According to the present invention, in order to maintain the concentrations of the organic impurities and metal impurities in the electrolytic solution 11 at 1g/L or less and 3 g/L or less, respectively, before dipped in the electrolytic solution 11, a copper wire is heat-treated at high temperature of 600 to 800 °C (e.g., about 700 °C) to burn out the organic impurities and acid-cleaned with an acid such as sulfuric acid, etc.

Further, while the electroplating is performed by allowing the current to flow between the anode plate 13 and rotational cathode drum 12 with the acid-cleaned copper wire dipped in the electrolytic solution 11, the continuous filtration is conducted to remove the solid impurities including the organic impurities and metal impurities out of the electrolytic solution 11 so that the concentrations of the organic impurities and metal impurities in the electrolytic solution 11 can be maintained at 1g/L or less and 3 g/L or less, respectively. At this time, the flux of the electrolytic solution 11 supplied to the electrolytic bath 10 may be 30 to 50 m³/hour.

Then, the first and second copper protuberance layers 121 and 122 are formed on the matte and shiny surfaces 110a and 110b of the copper film 110, respectively, by making the copper film 110 pass through at least two nuclei-creating plating baths 20 and 30 and at least two nuclei-growing plating baths 40 and 50 sequentially.

The electrolytic solutions 21 and 31 in the nuclei-creating plating baths 20 and 30 may comprise 8 to 25 g/L of copper ion, 50 to 160 g/L of sulfuric acid, and 0.05 to 1 g/L of the first additive, the electrolytic solutions 41 and 51 in the nuclei-growing plating baths 40 and 50 may comprise 30 to 70 g/L of copper ion, 50 to 160 g/L of sulfuric acid, and 0.03 to 1.2 g/L of the second additive, and each of the first and second additives may be Fe, Mo, W, V, Co, Cr, Mn, Zn, or a mixture of at least two thereof.

According to the present invention, the total current i_{c_total} applied in the nuclei-creating plating baths 20 and 30 is 3000 to 7000 A and the ratio of the total current i_{g_total} applied in the nuclei-growing plating baths 40 and 50 to the total current i_{c_total} applied in the nuclei-creating plating baths 20 and 30 is 0.2 to 2.

If the total current ratio is less than 0.2, no giant protuberance GP will be found at the first and second surfaces 100a and 100b when observing EBSD map of the cross section of the final copper foil 100. On the other hand, if the total current ratio is higher than 2, the first and second surfaces 100a and 100b of the copper foil 100 will have more than 9 giant protuberances per 5 µm, respectively.

As explained above, if the number of the giant protuberance GP per 5 µm is 0, the adhesion strength between the copper foil 100 and the active material would be low due to the insufficient contact area between the copper foil 100 and active material layer, and thus, the lifespan of the secondary battery would be dramatically decreased by the repetition of charge/discharge.

The capacity maintenance rate of the secondary battery deteriorates even when the number of the giant protuberance GP per 5 µm is 9 or more. The reason for this is that, due to too many giant protuberances GP, the active material cannot completely adhere to the first and second surfaces 100a and 100b of the copper foil 100 and void spaces occur. Accordingly, as the number of charge/discharge increases, more amount of the active material would be separated from the copper foil 100 and the lifespan of the secondary battery would be significantly decreased.

Subsequently, the first and second protective layers 131 and 132 are formed by conducting an anticorrosion treatment of the copper film 110 having the first and second copper plating layers 121 and 122 on the matte and shiny surfaces 110a and 110b thereof.

As illustrated in FIG. 3, according to an embodiment of the present invention, the step for forming the first and second protective layers 131 and 132 may be performed by dipping the copper film 110 having the first and second copper plating layers 121 and 122 on the matte and shiny surfaces 110a and 110b thereof into the anticorrosion solution 61 in the anticorrosion treatment bath 60 for 2 to 10 seconds.

A secondary battery electrode (i.e., anode) of the present invention may be obtained by coating one or both surfaces of the copper foil 100 of the present invention thus obtained with an anode active material using a conventional coating method, and a lithium secondary battery may be produced by using the electrode (anode) together with a cathode, an electrolyte, and a separator.

A lithium secondary battery includes a cathode for providing lithium ions to an anode when charged, the anode for providing lithium ions to the cathode when discharged, an electrolyte for providing an environment enabling the lithium ions to move between the cathode and anode, and a separator for electrically insulating the cathode from the anode to prevent unnecessary consumption of electrons which otherwise might be caused when the electrons generated in one electrode move to the other electrode via the inside of the secondary battery.

In a lithium secondary battery, an aluminum foil is generally used as a cathode current collector to be combined with a cathode active material, and the copper foil 100 is typically used as an anode current collector to be combined with a anode active material.

FIG. 4 is a cross sectional view of a secondary battery electrode according to an embodiment of the present invention.

As illustrated in FIG. 4, the secondary battery electrode 200 according to an embodiment of the present invention is an anode of a secondary battery and comprises a copper foil 100 of one of the aforementioned embodiments of the present invention and an active material layer(s) 210 and/or 220 formed on at least one of the first and second surfaces 100a and 110b of the copper foil 100.

The active material layers 210 and 220 may be formed of at least one anode active material selected from the group consisting of carbon; a metal (Me) of Si, Ge, Sn, Li, Zn, Mg, Cd, Ce, Ni or Fe; an alloy containing the metal (Me); an oxide (MeOₓ) of the metal (Me); and a complex of the metal (Me) and carbon.

Hereinafter, the present invention will be described in more detail with reference to the following examples and comparative examples. The following examples are given only for better understanding of the present invention and should not be construed as limiting the scope of the present invention.

### * Preparation of Copper Foil

### Example 1

A copper film was electrodeposited on a rotational cathode drum by allowing a current to flow between the anode plate and rotational cathode drum spaced apart from each other in the electrolytic solution in the electrolytic bath with a current density of 50 A/dm². For the electroplating process, a copper wire heat-treated at 700 °C was acid-cleaned with a sulfuric acid and then dipped in the electrolytic solution, and the surface of the rotational cathode drum was polished with a polishing brush of #1000 grit.

During the process for forming the copper film, the electrolytic solution was maintained at 50 °C, continuous filtration of the electrolytic solution was performed, the flux of the electrolytic solution supplied to the electrolytic bath was 40 m³/hour, and the flux deviation was controlled within 1 %. In the electrolytic solution, the concentration of copper was maintained at 70±10 g/L, the concentration of sulfuric acid was maintained at 80±10 g/L, the concentration of thiourea, an organic sulfide additive, was maintained at 2 ppm, and the concentration of chlorine was maintained at 10 ppm.

Then, the copper film passed through two nuclei-creating plating baths, two nuclei-growing plating baths, and an anticorrosion treatment bath, sequentially, to obtain a copper film having a thickness of 24 µm.

The total current i_{c_total} applied in the nuclei-creating plating baths was 2500 A and the ratio of the total current i_{g_total} applied in the nuclei-growing plating baths to the total current i_{c_total} applied in the nuclei-creating plating baths was 0.23.

### Example 2

A copper foil was produced in the same manner as Example 1, except that the ratio of the total current i_{g_total} applied in the nuclei-growing plating baths to the total current i_{c_total} applied in the nuclei-creating plating baths was 0.31.

### Example 3

A copper foil was produced in the same manner as Example 1, except that the ratio of the total current i_{g_total} applied in the nuclei-growing plating baths to the total current i_{c_total} applied in the nuclei-creating plating baths was 1.97.

### Comparative Example 1

A copper foil was produced in the same manner as Example 1, except that the copper film was subject to the anticorrosion treatment in the anticorrosion treatment bath without passing through the nuclei-creating plating baths and nuclei-growing plating baths.

### Comparative Example 2

A copper foil was produced in the same manner as Example 1, except that the ratio of the total current i_{g_total} applied in the nuclei-growing plating baths to the total current i_{c_total} applied in the nuclei-creating plating baths was 0.17.

### Comparative Example 3

A copper foil was produced in the same manner as Example 1, except that the ratio of the total current i_{g_total} applied in the nuclei-growing plating baths to the total current i_{c_total} applied in the nuclei-creating plating baths was 2.15.

The number of giant protuberances and ten-point mean roughness R_{zJIS} of each of the first and second surfaces, the room temperature tensile strength, the high temperature tensile strength, and the elongation of the copper foils thus obtained in the Examples and Comparative Examples were measured in accordance with the following methods, and the results thereof are shown in Table 1.

### * Ten-Point Mean Roughness (R_{zJIS})

The ten-point mean roughness R_{zJIS} of each of the first surface (a surface adjacent to the matte surface of the copper film) and the second surface (a surface adjacent to the shiny surface of the copper film) opposite to the first surface of the copper foil was measured by means of a contact-type surface roughness tester in accordance with JIS B 0601-1994 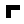 Definitions and Symbols of Surface Roughness 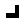 .

### * Number of Giant Protuberances

The number of the giant protuberances per 5 µm of each of the first and second surfaces of the copper foil was obtained by observing the EBSD map of the cross section of the sample, the giant protuberance being a protuberance protruding from a baseline by 0.7 µm or more, the baseline passing a point farthest away from the first or second surface among points on valleys and pores formed on or around the first or second surface, the baseline being parallel with the first or second surface.

### * Room Temperature Tensile Strength and High Temperature Tensile Strength

The room temperature tensile strength of the copper foil was measured by means of a universal testing machine (UTM) at room temperature in accordance with the method as provided in IPC-TM-650 Test Method Manual. Subsequently, after heat-treating the copper foil at 135 °C for 10 minutes, the tensile strength of the heat-treated copper foil was measured in accordance with the same method.

**[Table 1]**

| | | Ex.1 | Ex.2 | Ex.3 | Comp. Ex.1 | Comp. Ex.2 | Comp. |
|---|---|---|---|---|---|---|---|
| whether copper protuberance layer is formed or not | | ○ | ○ | ○ | × | ○ | ○ |
| i_{c_ total} | | 2500 | 2500 | 2500 | 2500 | 2500 | 2500 |
| i_{c_ total}/i_{c_total} | | 0.23 | 0.31 | 1.97 | - | 0.17 | 2.15 |
| R_{zJIS} (µm) | 1^{st} surface | 0.22 | 0.29 | 0.78 | 0.18 | 0.22 | 0.77 |
| | 2^{nd} surface | 0.23 | 0.23 | 0.75 | 0.22 | 0.23 | 0.78 |
| No. of giant protuberances | 1^{st} surface | 1 | 8 | 8 | 0 | 0 | 9 |
| | 2^{nd} surface | 5 | 3 | 7 | 0 | 0 | 3 |
| room temp. tensile strength (kgf/mm²) | | 45.2 | 64.3 | 28.8 | 45.3 | 27.5 | 29.5 |
| high temp. tensile strength (kgf/mm²) | | 39.3 | 43.2 | 25.7 | 39.3 | 24.3 | 24.2 |

The table 1 shows that no giant protuberance is formed if the copper protuberance layer is not formed (Comp. Ex. 1) or the ratio of the total current i_{g_total} applied in the nuclei-growing plating baths to the total current i_{c_total} applied in the nuclei-creating plating baths is less than 0.2 (Comp. Ex. 2), and more than 8 giant protuberances are formed if the ratio of the total current i_{g_total} applied in the nuclei-growing plating baths to the total current i_{c_total} applied in the nuclei-creating plating baths is more than 2 (Comp. Ex. 3).

### * Production of Secondary Battery

### Examples 4 to 6 and Comparative Examples 4 to 6

100 parts by weight of carbon commercially available as an anode active material was mixed with 2 parts by weight of styrene butadiene rubber (SBR) and 2 parts by weight of carboxymethyl cellulose (CMC), and a slurry was produced using distilled water as a solvent. Each of the copper foils of Examples 1 to 3 and Comparative Examples 1 to 3 having a width of 10 cm was coated with the slurry to a thickness of 50 µm by means of a doctor blade, dried at 120 °C, and pressed at a pressure of 1 ton/cm² to produce six secondary battery anodes.

The six secondary batteries were produced by using each secondary battery anode thus obtained in combination with an electrolyte, a secondary battery cathode, and a separator (porous polyethylene film). The electrolyte and cathode were prepared as follows.

1 M of LiPF₆, a solute, was dissolved in a non-aqueous organic solvent containing a mixture of ethylene carbonate (EC) and ethylene methyl carbonate (EMC) in a ratio of 1:2 to prepare a basic electrolytic solution, and then, 99.5 wt.% of the basic electrolytic solution was mixed with 0.5 wt.% of succinic anhydride to produce the electrolyte.

In addition, lithium manganese oxide (Li_{1.1}Mn_{1.85}Al_{0.05}O₄) was mixed with lithium manganese oxide (o-LiMnO₂) of orthorhombic crystal structure in a weight ratio of 90:10 to produce a cathode active material. The cathode active material, carbon black and a binder, polyvinylidene fluoride (PVDF), were mixed in a weight ratio of 85:10:5 and were further mixed with an organic solvent, NMP, to prepare a slurry. Both surfaces of an aluminum foil having a thickness of 20 µm were coated with the slurry and dried to produce a cathode.

The discharge capacity maintenance rate of the secondary batteries thus obtained in the Examples 4 to 6 and Comparative Examples 4 to 6 were measured in accordance with the following methods, and the results thereof are shown in Table 2.

### * Discharge Capacity Maintenance Rate of Secondary Battery

The capacity per 1 g of the cathode was measured at charge operating voltage of 4.3V and discharge operating voltage of 3.4V. In order to evaluate the high temperature lifespan, the charge/discharge test was conducted 50 cycles with current density of 0.2 C at high temperature of 50 °C and the discharge capacity maintenance rate was calculated in accordance with the following Formula 1.

### Formula 1: Discharge capacity maintenance rate (%) = (50^{th} discharge capacity/1^{st} discharge capacity) × 100

For reference, discharge capacity maintenance rate of a secondary battery, which is required in this art, is 90% or higher.

**[Table 2]**

| | | Ex.4 | Ex.5 | Ex.6 | Comp. Ex.4 | Comp. Ex.5 | Comp. Ex.6 |
|---|---|---|---|---|---|---|---|
| R_{zJIS} (µm) | 1^{st} surface | 0.22 | 0.29 | 0.78 | 0.18 | 0.22 | 0.77 |
| | 2^{nd} surface | 0.23 | 0.23 | 0.75 | 0.22 | 0.23 | 0.78 |
| No. of giant protuberances | 1^{st} surface | 1 | 8 | 8 | 0 | 0 | 9 |
| | 2^{nd} surface | 5 | 3 | 7 | 0 | 0 | 3 |
| Discharge Capacity Maintenance Rate (%) | | 92.5 | 96.2 | 93.5 | 88.5 | 85.2 | 88.7 |

The table 2 shows that, if any one of the first and second surfaces of the copper foil does not have 1 to 8 giant protuberances (Comparative Examples 4 to 6), the discharge capacity maintenance rate of the secondary battery produced with such copper foil does not meet the standard of 90% or higher as required in this art.

## Claims

1. A copper foil 100 for a secondary battery, the copper foil having a first surface and a second surface opposite thereto, the copper foil comprising:
a copper film having a matte surface facing the first surface and a shiny surface facing the second surface;
a first copper protuberance layer over the matte surface of the copper film;
a first protective layer over the first copper protuberance layer;
a second copper protuberance layer over the shiny surface of the copper film; and
a second protective layer over the second copper protuberance layer,
wherein, when observing a EBSD (Electron Backscattered Diffraction) map of a cross section the copper foil, each of the first and second surfaces has 1 to 8 giant protuberances per 5 µm, the giant protuberance being a protuberance protruding from a baseline by 0.7 µm or more, the baseline passing a point farthest away from the first or second surface among points on valleys and pores formed on or around the first or second surface, the baseline being parallel with the first or second surface.

2. The copper foil according to claim 1, wherein each of the first and second surfaces has a ten-point mean roughness (R_{zJIS}) of 0.2 to 0.8 µm.

3. The copper foil according to claim 1, wherein the copper foil has a thickness of 4 to 35 µm.

4. The copper foil according to claim 1, wherein the copper foil has a room temperature tensile strength of 28 to 65 kgf/mm² and a high temperature tensile strength of 25 kgf/mm² or more, the high temperature tensile strength being a tensile strength measured after heat treatment for 10 minutes at 135 °C.

5. The copper foil according to claim 1, wherein each of the first and second protective layers comprises at least one of chrome, nitrogen compound, and silane compound.

6. A method for manufacturing a copper foil for a secondary battery, the method comprising:
preparing a copper film having a matte surface and a shiny surface;
forming a first copper protuberance layer and a second copper protuberance layer over the matte surface and shiny surface of the copper film, respectively; and
forming a first protective layer and a second protective layer over the first copper protuberance layer and the second copper protuberance layer, respectively,
wherein,
the forming the first and second copper protuberance layers is performed by making the copper film pass through at least two nuclei-creating plating baths and at least two nuclei-growing plating baths sequentially, and
a ratio of total current applied in the nuclei-growing plating baths to total current applied in the nuclei-creating plating baths is 0.2 to 2.

7. The method according to claim 6, wherein the preparing the copper film is performed by allowing a current to flow between an anode plate and a rotational cathode drum spaced apart from each other in an electrolytic solution, and
the electrolytic solution comprises 50 to 100 g/L of copper ion, 50 to 150 g/L of sulfuric acid, 50 ppm or less of chlorine ion, and an organic additive.

8. The method according to claim 7, wherein the organic additive is hydroxyethyl cellulose (HEC), organic sulfide, organic nitride, or a mixture of two or more thereof.

9. The method according to claim 7, wherein a surface of the rotational cathode drum is polished with a polishing brush of #800 to #1500 grit.

10. The method according to claim 7, wherein the preparing the copper film comprises:
heat-treating a copper wire at 600 to 800 °C;
acid-cleaning the heat-treated copper wire;
dipping the acid-cleaned copper wire in the electrolytic solution;
conducting electroplating by allowing a current to flow between the anode plate and the rotational cathode drum while the copper wire is dipped in the electrolytic solution; and
conducting continuous filtration of the electrolytic solution while the electroplating is conducted.

11. The method according to claim 10, wherein, during the electroplating, concentrations of organic impurities and metal impurities in the electrolytic solution are maintained at 1g/L or less and 3 g/L or less, respectively.

12. The method according to claim 6, wherein the first and second protective layers are formed by conducting an anticorrosion treatment using at least one of chromate, benzotriazole (BTA), and a silane compound.

13. An electrode comprising:
a copper foil having a first surface and a second surface opposite thereto; and
an active material layer disposed over at least one of the first and second surfaces of the copper foil,
wherein, the copper foil comprises:
a copper film having a matte surface facing the first surface and a shiny surface facing the second surface;
a first copper protuberance layer over the matte surface of the copper film;
a first protective layer over the first copper protuberance layer;
a second copper protuberance layer over the shiny surface of the copper film; and a second protective layer over the second copper protuberance layer, and
when observing a EBSD (Electron Backscattered Diffraction) map of a cross section the copper foil, each of the first and second surfaces has 1 to 8 giant protuberance(s) per 5 µm, the giant protuberance being a protuberance protruding from a baseline by 0.7 µm or more, the baseline passing a point farthest away from the first or second surface among points on valleys and pores formed on or around the first or second surface, the baseline being parallel with the first or second surface.

14. The electrode according to claim 13, wherein the active material layer is formed of at least one anode active material selected from the group consisting of carbon; a metal (Me) of Si, Ge, Sn, Li, Zn, Mg, Cd, Ce, Ni or Fe; an alloy containing the metal (Me); an oxide (MeOₓ) of the metal (Me); and a complex of the metal (Me) and carbon.

15. A secondary battery comprising:
a cathode;
an anode;
an electrolyte for providing an environment enabling lithium ions to move between the cathode and the anode; and
a separator for electrically insulating the cathode from the anode,
wherein, the anode comprises:
a copper foil having a first surface and a second surface opposite thereto; and
an active material layer disposed over at least one of the first and second surfaces of the copper foil,
the copper foil comprises:
a copper film having a matte surface facing the first surface and a shiny surface facing the second surface;
a first copper protuberance layer over the matte surface of the copper film;
a first protective layer over the first copper protuberance layer;
a second copper protuberance layer over the shiny surface of the copper film; and
a second protective layer over the second copper protuberance layer, and
when observing a EBSD (Electron Backscattered Diffraction) map of a cross section the copper foil, each of the first and second surfaces has 1 to 8 giant protuberance(s) per 5 µm, the giant protuberance being a protuberance protruding from a baseline by 0.7 µm or more, the baseline passing a point farthest away from the first or second surface among points on valleys and pores formed on or around the first or second surface, the baseline being parallel with the first or second surface.
